# EUROPÄISCHE PATENTSCHRIFT

(11) **EP 2 478 685 B1**
(45) Veröffentlichungstag und Bekanntmachung des Hinweises auf die Patenterteilung: **14.02.2018**
(21) Anmeldenummer: 10751960.5
(22) Anmeldetag: 13.09.2010
(51) Int. Cl.: H04L 29/08

(54) **STEUERVORRICHTUNG, EIN-/AUSGABEVORRICHTUNG, VERBINDUNGSSCHALTEVORRICHTUNG UND VERFAHREN FÜR EIN FLUGZEUG-STEUERSYSTEM**
CONTROL DEVICE, INPUT/OUTPUT DEVICE, CONNECTION SWITCH DEVICE AND METHOD FOR AN AIRCRAFT CONTROL SYSTEM
DISPOSITIF DE COMMANDE, DISPOSITIF D'ENTRÉE/DE SORTIE, DISPOSITIF DE COMMANDE DE COMMUNICATION ET PROCÉDÉ POUR SYSTÈME DE COMMANDE D'AVION

(30) Priorität: 15.09.2009 DE 102009041599; 15.09.2009 US 242620 P
(43) Veröffentlichungstag der Anmeldung: 25.07.2012
(73) Patentinhaber: Airbus Operations GmbH, 21129 Hamburg (DE)
(72) Erfinder: GROSS, Claus-Peter, 21614 Buxtehude (DE); EINIG, Johannes, 65207 Wiesbaden (DE)
(74) Vertreter: LKGLOBAL Lorenz & Kopf PartG mbB Patentanwälte
(86) Internationale Anmeldenummer: PCT/EP2010/063376
(87) Internationale Veröffentlichungsnummer: WO 2011/032909

(56) Entgegenhaltungen:
- WO-A2-02/079985
- GB-A- 2 311 389
- US-A- 5 901 320
- US-A1- 2002 120 738
- US-A1- 2003 208 579
- US-A1- 2008 133 963
- BENVENISTE A: "Network of Excellence on Embedded Systems Design", ARTIST2 WORKSHOP ON INTEGRATED MODULAR AVIONICS,, 12. November 2007 (2007-11-12), Seiten 1-85, XP007918705,
- DÖHMEN G: "Processes and Methods for Integrated Modular Avionics", USA - EU WORKSHOP, AIRBUS, 7. Juli 2005 (2005-07-07), Seiten 1-15, XP007918706,
- FRANCOIS G R P: "Study on I/O in Time and Space Partitioned Systems", NLR-CR-2008-531-PT-1,, Nr. Part 1. issue 2, 1. November 2008 (2008-11-01), Seiten 1-64, XP007918704,
- ARINC: "AFDX / ARINC 664 Tutorial (1500-049)", INTERNET CITATION, Mai 2005 (2005-05), XP002429136, Gefunden im Internet: URL:http://www.acalmicrosystems.co.uk/whit epapers/sbs8.pdf?PHPSESSID=bd03 0f1b97f284d41ec00cf1ea2d5226 [gefunden am 2007-04-12]
- ANONYMOUS: "AFDX / ARINC 664 Tutorial", 20080829, [Online] 29. August 2008 (2008-08-29), Seiten 1-30, XP007918727, Gefunden im Internet: URL:http://www.techsat.com/fileadmin/media /pdf/infokiosk/TechSAT_TUT-AFDX EN.pdf>
- IAN LAND AND JEFF ELLIOTT: "Architecting ARINC 664, Part 7 (AFDX) Solutions", APPLICATION NOTE: VIRTEX-4 AND VIRTEX-5 FPGAS,, [Online] Nr. version 1.0.1, 22. Mai 2009 (2009-05-22), Seiten 1-25, XP007918728, Gefunden im Internet: URL:http://www.xilinx.com/support/document ation/application_notes/xapp1130.p>

## Beschreibung

### Verwandte Anmeldungen

Die vorliegende Anmeldung beansprucht die Priorität der deutschen Patentanmeldung Nr. 10 2009 041 599.8, eingereicht am 15. September 2009 und veröffentlicht unter der Veröffentlichungsnummer DE 10 2009 041 599 A1 und der US-Provisional Patentanmeldung Nr. 61/242,620 eingereicht am 15. September 2009.

### Gebiet der Erfindung

Die vorliegende Erfindung betrifft das technische Gebiet der Flugzeugtechnik und insbesondere betrifft die vorliegende Erfindung eine Signalübertragungvorrichtung zum Austausch von Signalen zwischen Systemen oder Geräten in einem Flugzeug. Ferner betrifft die vorliegende Erfindung eine Steuervorrichtung für ein Flugzeugnetzwerk, ein Verfahren zur Steuerung eines Flugzeugnetzwerks, eine Ein-/Ausgabevorrichtung für ein Flugzeugnetzwerk, ein Verfahren zum Identifizieren einer Ein-/Ausgabevorrichtung, eine Verbindungsschaltevorrichtung, ein Verfahren zum Identifizieren einer Ein-/Ausgabevorrichtung in einer Verbindungsschaltevorrichtung und ein Programmelement zum Ausführen der erfindungsgemäßen Verfahren.

### Technologischer Hintergrund

In einem Flugzeug, beispielsweise einem Airbus A380, mag ein Netzwerk installiert sein, welches diverse Geräte innerhalb des Flugzeuges miteinander verbinden mag. Ein solches Flugzeugnetzwerk, mag ADCN (Aircraft Data Communication Network) genannt werden. An einem solchen Netzwerk mögen Geräte angeschlossen sein, welche eine Recheneinheit mit einer eigenen Software und einen eigenen Prozessor aufweisen können. Diese Geräte mögen CPIOM (Core Processing Input Output Module) genannt werden.

Die Recheneinheiten oder CPIOMs mögen verschiedene Programme oder Applikationen gleichzeitig ausführen. Die entsprechende Programmsoftware für die Applikation mag nach der Installation einer Recheneinheit im Flugzeug, d.h. nach dem Einfügen der Recheneinheit in das Netzwerk, manuell über das Netzwerk (ADCN) geladen werden. Die Software, die auf die entsprechenden CPIOMs geladen wird, mag dabei aus einem Lager bezogen werden. Alternativ mag eine Recheneinheit (CPIOM) mit einer vorinstallierten Software gelagert sein, wobei die Software bereits in der Werkstatt vorgeladen oder auf die CPIOM eingespielt oder aufgespielt werden mag.

Das Lagern vorinstallierter CPIOM-Module mag es erfordern, dass mehrere verschiedene Recheneinheiten oder CPIOMs gelagert werden mögen, die aufgrund der unterschiedlichen Software auch unterschiedliche Partnummern, also Teilenummern, aufweisen mögen. Beispielsweise mögen für ein Flugzeug sieben verschiedene Recheneinheiten und somit sieben verschiedene Teilenummern vorhanden sein. Wegen der Vorkonfiguration mögen die Recheneinheiten der CPIOMs nicht untereinander austauschbar sein.

Die Druckschrift GB 2 311 389 A betrifft einen Client, der beim Einschalten eine Anfrage an einen Server nach einem Bootprogramm durchführt, um dem Client das Booten von seinem eigenen Datenspeicher zu erlauben.

Die Druckschrift WO 02/079985 A2 betrifft ein Server-Clientnetzwerk, wobei zunächst die gesamte Clientsoftware auf einem Server liegt, außer einem Client Downloader Utility, welches das Netzwerk von der nicht weiter initialisierten Hardware aus pollt bis ein entsprechender Server antwortet und die Clientsoftware auf den Client geladen wird.

Die Druckschrift US 2003/0208579 A1 beschreibt eine Line Replaceable Unit (LRU), die einen aktiven Pollaufruf ausführt und Befehle von einem Server erhält, um eine Konfigurationsdateie (configuration file) zu generieren und an einen Konfigurationsserver zu übermitteln, um benötigte Software auf das LRU zu laden. Es mag ein Bedürfnis sein, ein effizientes Betreiben eines Flugzeugnetzwerkes zu ermöglichen.

### Zusammenfassung der Erfindung

Die Erfindung wird durch die unabhängigen Ansprüche 1 und 5-7 definiert.

Gemäß einem Ausführungsbeispiel der vorliegenden Erfindung mag eine Steuervorrichtung für ein Flugzeugnetzwerk, ein Verfahren zur Steuerung eines Flugzeugnetzwerks, eine Ein-/Ausgabevorrichtung für ein Flugzeugnetzwerk, ein Verfahren zum Identifizieren einer Ein-/Ausgabevorrichtung, eine Verbindungsschaltevorrichtung, ein Verfahren zum Identifizieren einer Ein-/Ausgabevorrichtung und ein Programmelement bereitgestellt werden.

Gemäß einem exemplarischen Ausführungsbeispiel der vorliegenden Erfindung mag die Steuervorrichtung für ein Flugzeugnetzwerk eine Anwendungsbestimmungseinrichtung und eine Anwendungsbereitstelleinrichtung aufweisen. Die Anwendungsbestimmungseinrichtung mag dabei eingerichtet sein, eine unkonfigurierte Ein-/Ausgabeeinrichtung in dem Flugzeugnetzwerk zu erkennen und zumindest eine Anwendung zu bestimmen, welche zu der unkonfigurierten Ein-/Ausgabevorrichtung gehört bzw. mit der unkonfigurierten Ein-/Ausgabevorrichtung in Verbindung steht.

Die Anwendungsbereitstelleinrichtung mag eingerichtet sein, ein Programm (Software) bereitzustellen, welches der zumindest einen Anwendung entspricht, um das Programm auf die unkonfigurierte Ein-/Ausgabevorrichtung aufzuspielen und somit die im Wesentlichen unkonfigurierten Ein-/Ausgabevorrichtung zu konfgurieren.

In anderen Worten mag die Steuervorrichtung die Ein-/Ausgabevorrichtung überwachen und falls die Steuervorrichtung feststellt, dass eine unkonfigurierte Ein-/Ausgabevorrichtung in das Flugzeugnetzwerk angeschlossen wird, mag die Steuervorrichtung herausfinden, um welche Ein-/Ausgabevorrichtung oder um welchen Typ einer Ein-/Ausgabevorrichtung es sich handelt. Mit der Information über den Typ der Ein-/Ausgabevorrichtung mag die Steuervorrichtung in der Lage sein, die entsprechende zu der Ein-/Ausgabevorrichtung gehörende Software oder das zugehörige Programm bereitzustellen. Automatisch mag die Steuervorrichtung das Programm dann auf die Ein-/Ausgabevorrichtung aufspielen, so dass die Ein-/Ausgabevorrichtung in dem Flugzeugnetzwerk benutzt werden kann, im Wesentlichen ohne dass ein manueller Eingriff nötig sein mag.

Gemäß einem anderen exemplarischen Ausführungsbeispiel der vorliegenden Erfindung mag ein Verfahren zur Steuerung eines Flugzeugnetzwerks beschrieben werden, welches zunächst das Erkennens einer unkonfigurierten Ein-/Ausgabevorrichtung in dem Flugzeugnetzwerk und das Bestimmen von zumindest einer Anwendung aufweisen mag, welche zu der unkonfigurierten Ein-/Ausgabevorrichtung gehören mag bzw. welche der unkonfigurierten Ein-/Ausgabevorrichtung zugeordnet sein mag. Ferner mag das Verfahren vorsehen, ein Programm bereitzustellen, welches der zumindest einen bestimmten oder identifizierten Anwendung entspricht und dieses auch auf die unkonfigurierte Ein-/Ausgabevorrichtung aufzuspielen oder downzuladen. So mag sich die Ein-/Ausgabevorrichtung konfigurieren lassen und in den Betrieb des Netzwerkes integrieren lassen.

Die Anwendungsbereitstelleinrichtung und die Anwendungsbestimmungseinrichtung mögen in einem gemeinsamen Gehäuse der Steuervorrichtung angeordnet sein. Alternativ mögen die Anwendungsbereitstelleinrichtung und die Anwendungsbestimmungseinrichtung verteilt als jeweils separate Vorrichtungen realisiert sein, zwischen denen ein Informationsaustausch stattfinden mag. Um die Zugehörigkeit einer Anwendung zu einer Ein-/Ausgabevorrichtung bzw. umgekehrt erkennen zu können, mag beispielsweise eine Zuordnungstabelle oder eine Datenbank genutzt werden. In dieser Tabelle mag eine Verknüpfung zwischen einem Typ von einer Ein-/Ausgabevorrichtung zu einer Anwendung bzw. umgekehrt gespeichert sein. Es mag aber auch eine bestimmte Ein-/Ausgabevorrichtung mit genau einer oder mit mehreren Anwendungen verknüpft sein. Eine bestimmte Ein-/Ausgabevorrichtung bzw. eine Anwendung mag mittels eines individuellen Merkmals gekennzeichnet sein, wodurch sich eine Verknüpfung herstellen lassen mag. Ein solches individuelles Merkmal mag eine Seriennummer, ein Schlüssel, ein Name, eine Referenz oder eine Kodierung sein. Für eine Anwendung mag das individuelle Merkmal eine Anwendungskennung sein und für eine Ein-/Ausgabevorrichtung mag das individuelle Merkmal eine Ein-/Ausgabevorrichtungskennung sein.

Ferner mag gemäß einem anderen exemplarischen Ausführungsbeispiel der vorliegenden Erfindung eine Ein-/Ausgabevorrichtung für ein Flugzeugnetzwerk angegeben werden, welche eine erste Identifizierungseinrichtung aufweist. Die erste Identifizierungseinrichtung mag eingerichtet sein, zumindest eine Anwendung oder deren Typ, die auf der Ein-/Ausgabevorrichtung läuft, an eine Steuervorrichtung und/oder an eine Verbindungsschaltevorrichtung zu kommunizieren. Das Kommunizieren kann beispielsweise durch einen Trigger auf der Ein-/Ausgabevorrichtung ausgelöst werden. Die Anwendung kann alternativ auch nach einer externen Abfrage (Pollen), die von der Verbindungsschaltevorrichtung oder von der Steuervorrichtung an die Ein-/Ausgabevorrichtung gerichtet sein mag, von der Ein-/Ausgabevorrichtung an die jeweils anfragende Vorrichtung kommuniziert werden. Das Erkennen der Anwendung mag in der Ein-/Ausgabevorrichtung erfolgen.

Gemäß einem anderen exemplarischen Ausführungsbeispiel der vorliegenden Erfindung mag ein Verfahren zum Identifizieren einer Ein-/Ausgabevorrichtung beschrieben werden. Bei diesem Verfahren mag zumindest eine Anwendung oder zumindest ein Typ einer Anwendung oder zumindest eine Referenz einer Anwendung, welche auf der Ein-/Ausgabevorrichtung läuft, an eine Steuervorrichtung oder eine Verbindungsschaltevorrichtung kommuniziert werden.

Somit mag die Steuervorrichtung oder Verbindungsschaltevorrichtung in der Lage sein, die zumindest eine Anwendung bereitzustellen, die auf der Ein-/Ausgabevorrichtung läuft oder laufen soll. Zum Ermitteln der Anwendung mag beispielsweise im Wesentlichen lediglich die individuelle Kennung der Ein-/Ausgabevorrichtung bestimmt werden und an eine Steuervorrichtung und/oder die Verbindungsschaltevorrichtung weitergegeben werden. Die individuelle Kennung mag von der Ein-/Ausgabevorrichtung bereitgestellt werden. Alternativ mag die individuelle Kennung von einer Vorrichtung bereitgestellt werden, die extern zu der Ein-/Ausgabevorrichtung angeordnet sein mag. In einem anderen Beispiel mag die Ein-/Ausgabevorrichtung die ihr selbst zugeordnete Anwendung bestimmen und an die Steuervorrichtung die zugehörige Anwendungskennung übertragen.

Gemäß noch einem anderen exemplarischen Ausführungsbeispiel der vorliegenden Erfindung mag eine Verbindungsschaltevorrichtung angegeben werden, welche eine zweite Identifizierungseinrichtung aufweist. Die zweite Identifizierungseinrichtung mag eingerichtet sein, eine Ein-/Ausgabevorrichtung zu erkennen, welche an der Verbindungsschaltevorrichtung angeschlossen sein mag, und den Typ der Ein-/Ausgabevorrichtung zu bestimmen und an die Steuervorrichtung zu kommunizieren. Die zweite Identifizierungseinrichtung mag sich von der ersten Identifizierungseinrichtung unterscheiden.

Gemäß einem anderen exemplarischen Ausführungsbeispiel der vorliegenden Erfindung mag ein Verfahren beschrieben sein, welches das Erkennen einer Ein-/Ausgabevorrichtung in einer Verbindungsschaltevorrichtung aufweist. Die Ein-/Ausgabevorrichtung mag an der Verbindungsschaltevorrichtung angeschlossen sein.

Gemäß noch einem anderen exemplarischen Ausführungsbeispiel der vorliegenden Erfindung mag ein Programmelement angegeben werden, welches ausgebildet ist, wenn es von einem Prozessor ausgeführt wird, zumindest ein Verfahren auszuführen, welches aus der Gruppe der Verfahren ausgewählt ist, die Gruppe bestehend aus dem erfindungsgemäßen Verfahren zur Steuerung eines Flugzeugnetzwerks, dem erfindungsgemäßen Verfahren zum Identifizieren einer Ein-/Ausgabevorrichtung und dem erfindungsgemäßen Verfahren zum Identifizieren einer Ausgabevorrichtung in der Verbindungsschaltevorrichtung.

Gemäß noch einem anderen exemplarischen Ausführungsbeispiel mag ein computerlesbares Speichermedium beschrieben werden, welches einen Programmcode aufweist, der, wenn er von einem Prozessor ausgeführt werden mag, zumindest ein Verfahren ausführt, welches aus der Gruppe der Verfahren ausgewählt ist, die Gruppe bestehend aus dem Verfahren zur Steuerung eines Flugzeugnetzwerks, dem erfindungsgemäßen Verfahren zum Identifizieren einer Ein-/Ausgabevorrichtung und dem erfindungsgemäßen Verfahren zum Identifizieren einer Ein-/Ausgabevorrichtung in der Verbindungsschaltevorrichtung.

Ein computerlesbares Speichermedium mag eine Floppy Disk, eine Harddisk, eine Festplatte, ein USB (Universal Serial Bus) Speichermedium, ein RAM (Random Access Memory), ein ROM (Read Only Memory) oder ein EPROM (Erasable Programmable Read Only Memory) sein. Unter einem computerlesbaren Speichermedium mag auch ein Datenkommunikationsnetz, wie beispielsweise das Internet, verstanden werden, welches das Herunterladen von Programmcode ermöglichen mag.

Um einem Systemausfall in einem Flugzeugnetzwerk entgegenzuwirken, mag in dem Flugzeugnetzwerk eine entsprechende Redundanz vorhanden sein. Eine Redundanz mag erreicht werden, indem Komponenten des Flugzeugnetzwerkes mehrfach vorhanden sind und bei dem Ausfall einer Komponente deren Funktion übernehmen können.

Wird die zumindest eine Anwendung von der Hardwareplattform oder von der Hardware-Komponente, auf der sie läuft, getrennt, mag vermieden werden, dass unterschiedlich konfigurierte Geräte oder Systeme als redundante System vorgehalten werden müssen. Es mag also vermieden werden, dass für jede Anwendung die ausfallen könnte eine eigene mit der Anwendung konfigurierte Hardware vorgehalten werden muss. Die Konfiguration der Hardwareplattform kann bei Bedarf in Abhängigkeit von den ausgefallenen Anwendungen durchgeführt werden. Es mag also eine einheitliche Hardwareplattform mit einer Grundausstattung bereitgestellt werden, auf der Anwendungen, die für den Betrieb eines Flugzeuges notwendig sind, laufen können. Solche Anwendungen können Steuersysteme oder Regelsysteme für die Klimaanlage oder für Landeklappen sein. Diese Anwendungen können einer logischen Anwendungsebene zugeordnet werden.

Durch die Trennung der Anwendungsebene von der Hardwareebene mag also vermieden werden, dass die gleiche individuell konfigurierte Recheneinheit oder das gleiche CPIOM (Core Processing Input Output Module) mit der gleichen Software oder Anwendung mehrmals in dem System vorhanden sein muss. In anderen Worten mag vermieden werden, dass eine individuell konfigurierte Recheneinheit, also eine Recheneinheit, auf der bereits eine Anwendung installiert oder aufgespielt sein mag, vorgehalten werden muss. Das Konfigurieren, also das Aufspielen der Anwendung, mag bei den Ersatzkomponenten im Wesentlichen erst in einem Fehlerfall oder im Wesentlichen bei der Installation erfolgen und dann im Wesentlichen angepasst auf den gerade vorliegenden Ausfall oder die gerade vorliegende Installation von Komponenten oder von CPIOMs. Mit derselben Anzahl von unkonfigurierten Komponenten, die erst im Fehlerfall konfiguriert werden, mag sich eine größere Anzahl von Ausfallkombinationen erreichen lassen, als mit derselben Anzahl von bereits vorkonfigurierten Komponenten. Für den Fall, dass sämtliche als Redundanz vorgesehenen Ersatz-Komponenten bereits im Einsatz sind und eine zusätzliche Ein-/Ausgabevorrichtung ausfällt, die jedoch eine größere Kritikalität aufweisen mag, kann eine Anwendung, die auf einer Ersatz-Komponente läuft und eine geringere Kritikalität aufweisen mag, durch die Anwendung der höheren Kritikalität ersetzt werden. Eine Trennung von Anwendungsebene und Hardwareebene mag somit den Anwendungstausch ermöglichen. Die Anwendung mag folglich unabhängig von der Hardwareplattform getauscht werden können. Es mag eine einheitliche Hardwareplattform für alle Anwendungen eingesetzt werden. Im Wesentlichen mögen vor dem Aufspielen einer Anwendung einheitliche Hardwarelcomponenten als redundante Komponenten vorgesehen sein. Im Wesentlichen erst mit dem Aufspielen der entsprechenden Anwendung mag die Hardware-Komponente die individuelle Funktion einer ausgefallenen Komponente oder einer ausgefallenen Ein-/Ausgabevorrichtung übernehmen. Gleiches mag bei der Installation einer Komponente gelten.

Die Hardwareebene mag eine Schnittstelle, eine Programmierschnittstelle oder eine API (Application Programming Interface) bereitstellen, auf die eine Anwendung zugreifen kann. Die Hardwareebene mag in einem Beispiel eine Firmware, eine Middleware und /oder ein Betriebssystem aufweisen. Die Hardwareebene mag auch als Hardwareschicht bezeichnet werden und die Anwendungsebene mag als Anwendungsschicht bezeichnet werden. Somit können auf eine Hardwarekomponente oder auf eine Ein-/Ausgabevorrichtung unterschiedliche Anwendungen geladen werden, die auf derselben Basis oder auf derselben Hardwareebene aufsetzen. Die Anwendungen mögen als Programmcode oder Programmelement gespeichert sein, wodurch sie im Wesentlichen nur einen geringen Platzbedarf haben aber mindestens einmal oder mehrfach reproduzierbar sein mögen, auch auf verschiedenen Ein-/Ausgabevorrichtungen. Beispielsweise kann mit nur einer Hardwarekomponente eine Einfach-Redundanz für unterschiedliche Ein-/Ausgabevorrichtungen bereitgestellt werden. Entsprechendes mag für eine n-flache bzw. mehrfache Redundanz gelten.

Sollte eine individuelle Konfiguration des Systems oder Gerätes vorliegen, so müsste das Gerät, die Ein-/Ausgabevorrichtung oder die CPIOM nach einem Ausfall ausgebaut und durch ein neues Gerät desselben Typs, also mit derselben Software oder Anwendung, ersetzt werden. Aufgrund mehrfach vorhandener Teilenummer, um die individuelle konfigurierten Geräte oder CPIOMs zu kennzeichnen, mag auch ein erhöhter Lageraufwand entstehen.

Wenn die Anwendung erkannt wird, welche auf einer Ein-/Ausgabevorrichtung konfiguriert werden soll und das zugehörige Programm über das Flugzeugnetzwerk direkt aus der Steuervorrichtung bereitgestellt wird, mag auch das Laden der entsprechenden Software über eine externe Datenquelle vermieden werden, wie beispielsweise ein CD-ROM. Das Aufspielen der Anwendungen auf die Komponenten mag berührungslos bezogen auf die Komponente direkt erfolgen. Insbesondere mag vermieden werden, dass ein manuelles Laden mittels eines Technikers erfolgen muss, um die Software oder das Programm zu laden.

Es mag also gemäß eines exemplarischen Ausfüllrungsbeispiels der vorliegenden Erfindung in dem Netzwerk, insbesondere in dem Flugzeugnetzwerk, ein unkonfiguriertes Ersatzgerät angeschlossen sein, welches so konfigurierte werden kann, dass es die Funktion oder die Applikationen eines beliebigen anderen Gerätes übernehmen kann, nachdem dieses andere Gerät ausgefallen sein mag. Die Funktion kann von der Steuervorrichtung oder von der Zentrale auf das Ersatzgerät aufgespielt werden, das heißt auf die redundante Ein-/Ausgabevorrichtung oder auf das unkonfigurierten CPIOM. Nach dem Aufspielen der zugehörigen Anwendung oder der zumindest einen Anwendung mag das Ersatzgerät die Funktion eines ausgefallenen Gerätes übernehmen.

Die Steuervorrichtung mag also die ausgefallene konfigurierte Recheneinheit oder das konfigurierte CPIOM identifizieren und eine zu dieser identifizierten konfigurierten CPIOM zugeordnete Software aus einem internen Speicher in der Steuervorrichtung laden.

Da die CPIOMs in einem Beispiel im Wesentlichen rein digital ausgeführt sein mögen, mag vermieden werden, dass für die Software und/oder die Hardware unterschiedliche Partnummern vorgesehen werden müssen.

Bei dem Einsatz von nicht rein digitalen CPIOM's könnten beispielsweise 7 unterschiedliche Partnummern nicht nur von der Software unterschiedlich sein, sondern auch von der Hardware unterschiedlich sein, da beispielsweise unterschiedliche Sensoren etc. an die CPIOMs oder Hardware angeschlossen werden mögen und so die Kombinationen aus Hardware und Software mittels Partnummern unterscheidbar gemacht werden mögen.

Die Steuervorrichtung mag während eines Fluges in der Lage sein, ein ausgefallenes System automatisch, das heißt im Wesentlichen ohne den Einfluss eines Technikers, zu ersetzen, um somit die im Wesentlichen volle Funktionalität des Flugzeuges automatisch wiederherzustellen.

Die automatische Konfiguration mag nicht nur bei der Fehlerbehandlung eingesetzt werden. Bei der Installation mag ein unkonfiguriertes Gerät ebenfalls erkannt und mit einer ihm zugeordneten Anwendung versehen werden, um so schnell in das Netzwerk integriert zu werden.

Das Aufspielen einer Funktion des ausgefallenen Gerätes auf das zunächst unkonfigurierte Gerät kann während des Fluges erfolgen.

Die Anwendungen oder Programme mögen entsprechend ihrer Wichtigkeit oder Kritikalität redundant auf mehreren konfigurierten Ein-/Ausgabeeinrichtungen parallel laufen. Das mag bedeuten, dass beispielsweise eine kritische Anwendung, wie beispielsweise das Landesystem oder eine Steuerung für Landeklappen, auf drei unabhängigen separaten Ein-/Ausgabevorrichtungen laufen mag, um eine dreifache Redundanz bereitzustellen. Bei der angenommenen dreifachen Redundanz mag es möglich sein, dass zwei Geräte bzw. zwei Anwendungen ausfallen und dennoch die zu der Anwendung gehörende Funktion, beispielsweise die Landeklappenfunktion, im Wesentlichen gewährleistet sein mag. Allerdings mag die Redundanz herabgestuft worden sein, da sie statt dreifach nun nur noch einfach vorhanden sein mag.

Sollte eine Anwendung ausfallen oder ein Gerät, auf dem eine spezifische Anwendung installiert sein mag, so kann gemäß vorliegender Erfindung die Steuervorrichtung das redundant vorhandene unkonfigurierte System mit einem Abbild der zumindest einen Anwendung des ausgefallenen Geräts oder CPIOMs versorgen. Somit mag trotz Ausfall eines Geräts immer noch die maximal notwendige Redundanz, also beispielsweise in oben aufgeführten Beispiel das Vorhandensein von drei redundanten Anwendungen, gewährleistet werden. Wenn diese maximal vorgegebene Redundanz vorhanden ist, mag ein ausgefallenes Gerät oder eine ausgefallene Ein-/Ausgabevorrichtung nicht sofort nach einem Flug ersetzt werden müssen. Folglich mag die Standzeit zwischen zwei Flügeln durch einen Ausfall nicht zusätzlich erhöht werden und damit der Wartungsaufwand reduziert werden.

In anderen Worten mag bei einem Ausfall von nur einer Recheneinheit die vorhandene unkonfigurierten Rescrveeinheit oder die unkonfigurierte Ein-/Ausgabevorrichtung die Aufgabe der ausgefallenen Recheneinheit übernehmen und die vorgegebene Redundanz aufrechterhalten. Die Steuervorrichtung mag eingerichtet sein, eine vorgegebene Redundanz durch das Aufspielen entsprechender Anwendungen auf unkonfigurierten Komponenten solange aufrecht zu erhalten, solange eine ausreichend hohe Anzahl an Komponenten vorhanden sein mag.

In einem Beispiel mag nicht nur eine einzige unkonfigurierten Ein-/Ausgabevorrichtung, Komponente oder ein einziges Reservesystem vorhanden sein, sondern eine beliebige Mehrzahl von Reserveeinheiten. Beispielsweise mag dieselbe Anzahl an vorhandenen Geräten auch als Reserveeinheit vorhanden sein.

Der Flugbetrieb mag sich bei Einsatz der Erfindungsgeznäßen Steuervorrichtung flexibel gestalten lassen, das heißt das Ausfallen einer Ein-/Ausgabevorrichtung mag im Wesentlichen zu keiner Einschränkung im weiteren Flugbetrieb führen.

Die Redundanz mag sich virtuell erhöhen lassen. Mittels des parallelen Vorhandenseins einer maximal vorgebbaren Anzahl von redundanten Geräten oder Anwendungen mag die Redundanz tatsächlich erhöht werden. Das Bereitstellen einer unkonfigurierten Ein-/Ausgabevorrichtung mag die Redundanz virtuell erhöhen, da im Falle eines Ausfalls eines Systems der tatsächlichen Redundanz auch dieses ersetzt werden kann. Es mag die Sicherheit eines mit der erfindungsgemäßen Steuervorrichtung ausgestatteten Flugzeuges erhöht werden. Die Redundanz mag sich auch über das von Flugbehörden geforderte Maß erhöhen lassen.

Ferner mag sich die Anzahl vorhandener Geräte reduzieren lassen, um zu einer im Wesentlichen gleichen Redundanz zu kommen wie ohne den Einsatz der erfindungsgemäßen Steuervorrichtung, wodurch sich Gewicht und Kosten einsparen lassen mögen, da weniger Geräte verwendet werden mögen.

Sollte ein System, welches zur Sicherstellung der tatsächlichen Redundanz vorhanden ist, ausfallen, so würde die Redundanz des Gesamtsystems verloren gehen oder reduziert werden, was zu einem "Downgrading" der Flugzeugsysteme führen kann. Ein Downgrading läge beispielsweise vor, wenn nach Ausfall einer Anwendung statt einer vorgegebenen dreifachen Redundanz nur noch eine zweifache Redundanz vorhanden wäre.

Gemäß einem weiteren exemplarischen Ausführungsbeispiel der vorliegenden Erfindung mag die Steuervorrichtung eine Fehlererkennungseinrichtung aufweisen. Die Fehlererkennungseinrichtung mag eingerichtet sein, einen Fehler in einer konfigurierten Ein-/Ausgabevorrichtung zu erkennen. Unter einer konfigurierten Ein-/Ausgabevorrichtung mag eine Ein-/Ausgabevorrichtung verstanden werden, welche zumindest eine vorgebbare Anwendung oder zumindest eine vorgebbare Applikation aufweist.

Die Anwendungsbestimmungseinrichtung mag eingerichtet sein, bei Enddecken einer unkonfigurierten Ein-/Ausgabevorrichtung, die für diese Ein-/Ausgabevorrichtung vorgesehenen Anwendungen zu bestimmen.

Die Anwendungsbestimmungseinrichtung mag eingerichtet sein, in einem Fehlerfall die zumindest eine vorgebbare Anwendung oder Applikation auf einer konfigurierten Ein-/Ausgabevorrichtung so zu bestimmen, dass die zumindest eine Anwendung eine von dem Fehler in der konfigurierten Ein-/Ausgabevorrichtung betroffene Anwendung ist. In anderen Worten mag die Anwendungsbestimmungseinrichtung in der Steuervorrichtung den Typ der zumindest einen zu ersetzenden Anwendung identifizieren.

Mittels einer Fehlererkennungseinrichtung mag sich neben einer Erkennung des unkonfigurierten Systems und dessen Inbetriebnahme auch die Fehlerbehebung durchführen lassen. Die Fehlererkennungseinrichtung mag die auf der konfigurierten Ein-/Ausgabevorrichtung vorhandenen oder vorgegebenen Anwendungen identifizieren und an die Anwendungsbestimmungseinrichtung weitergeben, um die notwendigen Anwendungen bereitzustellen.

Gemäß einem anderen exemplarischen Ausführungsbeispiel weist die Steuervorrichtung weiter eine Verbindungsbestimmungseinrichtung auf. Die Verbindungsbestimmungseinrichtung mag eingerichtet sein, eine Verbindung, welche zu der konfigurierten Ein-/Ausgabevorrichtung geführt hat, auf die ursprünglich unkonfigurierte Ein-/Ausgabevorrichtung umzulegen. Eine Verbindung mag beispielsweise eine Anwendung mit einem Peripheriegerät und/oder mit einer anderen Anwendung verbinden. Eine Verbindung kann eine virtuelle Verbindung sein.

Es mag sich ein Re-Routing, d.h. ein Umlegen von Verbindungen, innerhalb des Netzes durchführen lassen. So mögen sich Sensoren oder Aktuatoren oder allgemein Peripheriegeräte mit der jeweils zugeordneten oder zugehörigen Anwendung verbinden lassen. Da in einem Fehlerfall eine Migration zumindest einer Anwendung von einem konfigurierten System auf ein unkonfiguriertes Gerät stattfinden mag, mag es auch nötig sein, die zu der zunächst konfigurierten Ein-/Ausgabevorrichtung geführten Verbindungen auf die zunächst unkonfigurierte und jetzt neu konfigurierte Ein-/Ausgabevorrichtung umzulegen. Bei einer Migration mag eine Anwendung auf einer anderen Hardware-Komponente und/oder an einem anderen Ort ausgeführt werden als vor der Migration. Eine Migration mag mit dem Aufspielen einer Anwendung auf eine Hardware-Komponente verbunden sein.

Mittels der Verbindungsbestimmungseinrichtung mögen sich die Peripheriegeräte wieder mit zugehörigen Anwendungen verbinden lassen.

Gemäß noch einem anderen exemplarischen Ausführungsbeispiel der vorliegenden Erfindung mag die Umlegung der Verbindung in Abhängigkeit einer Priorität einer zu den Verbindungen gehörenden Anwendung erfolgen. Die Priorität mag durch zumindest eines der Kriterien bestimmt werden ausgewählt aus der Gruppe der Kriterien bestehend aus der Kritikalität einer Anwendung, der Signallaufzeit, der Signalverzögerungszeit oder Latent und der Anzahl der Verarbeitungsstufen.

Beim Umlegen von Verbindungen mag es vorkommen, dass eine Verbindung, welche zu einer kritischen Anwendung gehört, über stark belastete oder langsame Knoten geführt würde. Daher mag ein Berücksichtigen der Last oder der Latenzzeit eines Knotens oder der Anzahl der Zwischen-Knoten, die zwischen Peripherie und Ein-/Ausgabevorrichtung liegen, ein Sicherstellen einer Reaktionszeit oder Servicequalität ermöglichen.

Gemäß noch einem anderen exemplarischen Ausführungsbeispiel der vorliegenden Erfindung mag die Verbindungsbestimmungseinrichtung eingerichtet sein, zum Umlegen der Verbindung mit einer Verbindungsschaltevorrichtung zu kommunizieren.

Für die Kommunikation zwischen der Verbindungsschaltevorrichtung und der Steuervorrichtung mag ein Kommunikationskanal zwischen der Verbindungsschaltevorrichtung und der Steuervorrichtung aufgebaut werden, über den Informationen, beispielsweise betreffend die Signallaufzeit oder die Auslastung eines Knotens, ausgetauscht werden können.

Gemäß noch einem anderen exemplarischen Ausführungsbeispiel der vorliegenden Erfindung mag die Steuervorrichtung zum Betrieb an einer flugzeugspezifischen Infrastruktur, wie beispielsweise einer flugzeugspezifischen Stromversorgung, eingerichtet sein. Ferner mag die Vorrichtung auch zum Betrieb eines flugzeugspezifischen Netzwerks, wie beispielsweise einem ARINC 429 oder ARINC 629 oder AFDX (Avionic Full Duplex Netzwerks), ausgebildet sein. Insbesondere mag ein digitaler und/oder analoger Anschluss von Peripheriekomponenten wie Sensoren unterschieden werden. Die Steuervorrichtung mag für den Anschluss von flugzeugspezifischen Sensoren vorbereitet sein. Dabei können die Peripheriekomponenten in jeglicher Art und Weise an die Steuervorrichtung oder an das Flugzeugnetzwerk angeschlossen werden. Dabei mögen alle Arten von Daten unterstützt werden. Die Art der Datenübermittlung von z.B. den Sensoren mag analog, digital (ARINC 429, ARINC 629 etc.) oder von jeglicher anderen Art sein. Die Kommunikation der CPIOM's mit den Switchen, den IOM's, dem SSNMS bzw. den anderen Netzwerkkomponenten, kann in einem exemplarischen Ausführungsbeispiel über AFDX erfolgen. In anderen Worten können beispielsweise die Peripheriegeräte wie Sensoren digital und/oder analog an das Netz angeschlossen sein, die netzinterne Kommunikation mag über AFDX erfolgen.

Eine Stromversorgung, die für ein Flugzeug typisch sein mag, mag eine 28 V Gleichstrom-Stromversorgung sein.

Es mag sich also ein Integrated Modular Avionics (IMA) oder ein IMA der nächsten Generation (next generation IMA) realisieren lassen. IMA mag ein anderer Name für ein Flugzeugnetzwerk sein.

Die Ein-/Ausgabevorrichtung oder CPIOM mag eine Pinprogrammierung (Pin Programming) oder ein Pinkodieren als Identifizierungseinrichtung oder in einer Identifiziereinrichtung aufweisen. Über das Pincoding, das heißt das individuelle Anordnen von Pins, mag sich der Typ einer Ein-/Ausgabevorrichtung oder die Ein-/Ausgabevorrichtungskennung und somit die zugehörigen Anwendungen oder Anwendungskennungen identifizieren lassen. Mittels des Pincodings oder des Pin Programmings, also des Programmierens über einen Pincode, mag die Steuervorrichtung die zu der unkonfigurierten Ein-/Ausgabevorrichtung gehörenden Anwendungen ermitteln können. Die Pinprogrammierung mag eine Adresse für eine Ein-/Ausgabevorrichtung bestimmen. Eine Pinkodierung mag eine individuelle Kennzeichnung einer Ein-/Ausgabevorrichtung sein.

Gemäß einem anderen exemplarischen Ausführungsbeispiel mag die zweite Identifizierungseinrichtung oder die weitere Identifizierungseinrichtung einen Port aufweisen, über den die angeschlossene Ein-/Ausgabeeinrichtung identifiziert werden kann. Über den Port mag beispielsweise die individuelle Kennzeichnung der an dem Port angeschlossenen Ein-/Ausgabeeinrichtung ermittelt werden können.

Gemäß noch einem anderen exemplarischen Ausführungsbeispiel der vorliegenden Erfindung mag die Verbindungsschaltevorrichtung eine Speichereinrichtung aufweisen, wobei die Speichereinrichtung einen dynamischen Speicherbereich zum Speichern von virtuellen Verbindungen aufweisen mag.

Durch das Trennen von einem dynamischen Speicherbereich von einem festen Speicherbereich mag sich ein dynamisches Routen von virtuellen Verbindungen oder von virtuellen Links durchführen lassen.

Es soll angemerkt werden, dass unterschiedliche Aspekte der Erfindung mit Bezug auf unterschiedliche Gegenstände beschrieben wurden. Insbesondere wurden einige Aspekte mit Bezug auf Vorrichtungsansprüche beschrieben, wohingegen andere Aspekte in Bezug auf Verfahrensansprüche beschrieben wurden. Ein Fachmann kann jedoch der vorangehende Beschreibung und der folgenden Beschreibung entnehmen, dass, außer es wird anders beschrieben, zusätzlich zu jeder Kombination von Merkmalen, die zu einer Kategorie von Gegenständen gehören, auch jede Kombination zwischen Merkmalen als von diesem Text offenbart angesehen wird, die sich auf unterschiedliche Kategorie von Gegenständen bezieht. Insbesondere sollen Kombinationen zwischen Merkmalen von Vorrichtungsansprüchen und Merkmalen von Verfahrensansprüchen offenbart sein.

Dies und andere Aspekte der vorliegenden Erfindung mag mit Bezug auf die Ausfüheungsbeispiele weiter dargestellt werden, die im Folgenden beschrieben werden mögen. Im Folgenden werden exemplarische Ausführungsbeispiele der vorliegenden Erfindung mit Bezug zu den Figuren dargestellt.

Kurze Beschreibung der Figuren
Fig. 1a zeigt ein Blockschaltbild einer Steuervorrichtung gemäß einem exemplarischen Ausführungsbeispiel der vorliegenden Erfindung.
Fig. 1b zeigt ein Blockschaltbild einer Ein-/Ausgabevorrichtung für ein Flugzeugnetzwerk gemäß einem exemplarischen Ausführungsbeispiel der vorliegenden Erfindung.
Fig. 1c zeigt ein Blockschaltbild einer Verbindungsschaltevorrichtung gemäß einem exemplarischen Ausführungsbeispiel der vorliegenden Erfindung.
Fig. 2 zeigt ein Flugzeugnetzwerksystem in einem fehlerfreien Zustand gemäß einem exemplarischen Ausführungsbeispiel der vorliegenden Erfindung.
Fig. 3 zeigt das Flugzeugnetzwerksystem gemäß Fig. 2 mit drei virtuellen Verbindungen gemäß einem exemplarischen Ausführungsbeispiel der vorliegenden Erfindung.
Fig. 4 zeigt ein Flugzeugnetzwerksystem mit einer ausgefallenen Ein-/Ausgabevorrichtung gemäß einem exemplarischen Ausführungsbeispiel der vorliegenden Erfindung.
Fig. 5 zeigt ein Flugzeugnetzwerksystem nach einer Wiederherstellung der Redundanz gemäß einem exemplarischen Ausführungsbeispiel der vorliegenden Erfindung.
Fig. 6 zeigt ein Flussdiagramm für ein Verfahren zur Steuerung eines Flugzeugnetzwerks gemäß einem exemplarischen Ausführungsbeispiel der vorliegenden Erfindung.
Fig. 7 zeigt ein Flussdiagramm für ein Verfahren zum Identifizieren einer Ein-/Ausgabevorrichtung gemäß einem exemplarischen Ausführungsbeispiel der vorliegenden Erfindung.
Fig. 8 zeigt ein Flussdiagramm für ein Verfahren zum Identifizieren einer Ein-/Ausgabevorrichtung in einer Verbindungsschaltevorrichtung gemäß einem exemplarischen Ausführungsbeispiel der vorliegenden Erfindung.

### Detaillierte Beschreibung der Figuren

Die Darstellungen in den Figuren sind schematisch und nicht maßstäblich. In der folgenden Beschreibung der Figuren werden die gleichen Bezugsziffern für gleiche oder sich entsprechende Elemente verwendet.

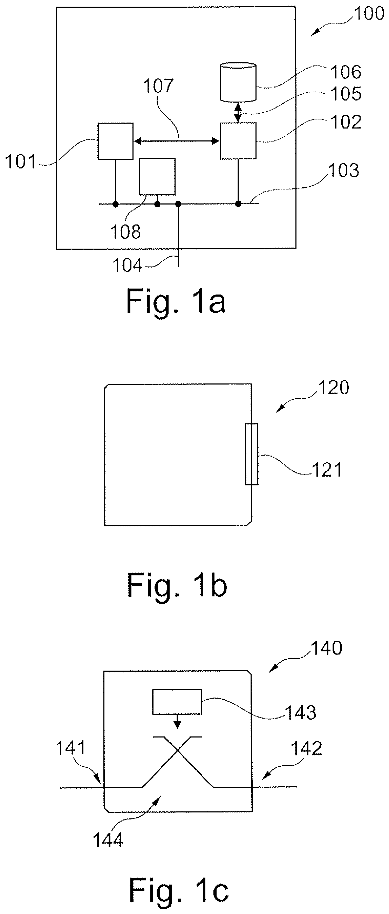

Fig. 1a zeigt ein Blockschaltbild einer Steuervorrichtung 100, welche die Anwendungsbestimmungscinrichtung 101 und die Anwendungsbereitstelleinrichtung 102 aufweist. Über den internen Bus 103 sind die Anwendungsbestimmungseinrichtung 101 und die Anwendungsbereitstelleinrichtung 102 miteinander verbunden und können auf die externe Verbindung oder das Interface 104 zugreifen. Nicht in Fig. 1a dargestellt ist das Flugzeugnetzwerk oder AFDX-Netzwerk, mit dem die Steuervorrichtung 100 oder der SSNMS 100 (Software Storage and Network Management Server) mit dem Interface 104 verbunden ist. Die Anwendungsbestimmungscinrichtung erlaubt es im Fall eines Neuanschlusses eines ebenfalls in Fig. 1a nicht dargestellten Ein-/Ausgabemoduls oder CPIOMs, die dem jeweiligen CPIOM zugehörigen Anwendungen zu bestimmen. Dazu bestimmt die Anwendungsbestimmungseinrichtung den Typ des CPIOMs und kann den bestimmten Typ der Anwendungsbereitstelleinrichtung 102 zur Verfügung stellen.

Die Anwendungsbereitstelleinrichtung 102 kann über den internen Links 105 auf die Datenbank 106 zugreifen, in der sowohl die Zuordnung eines CPIOMs zu entsprechenden Anwendungen gespeichert ist als auch der Programmcode der entsprechenden Anwendung. Das heißt, in der Datenbank 106 ist auch eine Programmbibliothek verfügbar, die von der Anwendungsbestimmungseinrichtung über den internen Link 105 ausgelesen werden kann und zunächst über den internen Bus 103 und das externe Interface 104 dem zugehörigen CPIOM zur Verfügung gestellt werden kann.

Um das CPIOM zu identifizieren kann das CPIOM eine eindeutige Adresse oder eine eindeutige Kennung aufweisen, über die die Steuervorrichtung 100 oder der SSNMS 100 das CPIOM identifizieren und eine ihm zugeordnete Anwendung bestimmen kann. Die Anwendungsbereitstelleinrichtung 102 kann also ein Programm aus der Datenbank 106 bereitstellen, welches der zumindest einen Anwendung entspricht, die als dem CPIOM zugehörig identifiziert wurde. Die Anwendungsbereitstelleinrichtung 102 kann über Programmaufspielmechanismen, wie beispielsweise FTP (File Transfer Protocol), die zugehörigen Programme auf die identifizierten CPIOMs aktiv aufspielen.

Die Kommunikation zwischen der Anwendungsbestimmungseinrichtung 101 und der Anwendungsbereitstelleinrichtung 102 ist durch den Doppelpfeil 107 dargestellt.

Die Steuervorrichtung 100 kann ferner die Fehlererkennungseinrichtung 108 aufweisen, welche ebenfalls an dem internen Bus 103 angeschlossen ist. Die Steuervorrichtung kann auch redundant aufgebaut sein und kann beispielsweise auch zumindest zweifach vorhanden sein. Durch das redundante Auslegen der Steuervorrichtung, mag der Ausfall einer der zumindest zwei Steuervorrichtungen toleriert werden.

Mittels der Fehlererkennungseinrichtung lässt sich nicht nur eine unkonfigurierte Ein-/Ausgabevorrichtung und deren zugehörige Software bestimmen. Es lässt sich auch eine defekte oder eine fehlerhafte konfigurierte Ein-/Ausgabevorrichtung erkennen und eine zu der konfigurierten Ein-/Ausgabevorrichtung gehörende Anwendung oder mehrere Anwendungen identifizieren und diese als Kopie auf einer redundanten unkonfigurierten Ein-/Ausgabevorrichtung aufspielen. In anderen Worten lässt sich mittels der Fehlererkennungseinrichtung ein Fehler erkennen und die Anwendungsbestimmungseinrichtung 102 so ansteuern, dass die Anwendungsbestimmungseinrichtung 102 nicht nur eine Neukonfiguration einer unkonfigurierten Ein-/Ausgabevorrichtung anfertigt, sondern eine Kopie einer ausgefallenen konfigurierten Ein-/Ausgabevorrichtung anfertigt. Die Anwendungen lassen sich als ein Image auf die Ein-/Ausgabevorrichtung aufspielen.

Innerhalb der Steuervorrichtung 100 mögen sich zwei Betriebsmoden unterscheiden lassen, die mit einem nicht dargestellten Schalter umschaltbar sein mögen.

Ein erster Betriebsmodus mag einen intelligenten Plug-and-Play-Mechanismus bereitstellen oder in anderen Worten einen intelligenten Konfigurationsservice. Mit diesem Plug-and-Play Mechanismus mag sich ein intelligentes IMA-System realisieren lassen. Der Plug-and-Play-Betriebsmodus oder der Konfigurationsbetriebsmodus mag bei Wartungsarbeiten von Interesse sein oder auch im Falle von Systemfehlern.

Der Plug-and-Play-Mechanismus oder die automatische CPIOM-Erkennung und die automatische Softwareinstallation kann aktiviert werden, wenn ein neues CPIOM in einem Netz installiert und das System erneut gestartet wird. Mittels geeigneter Trigger-Mechanismen kann ein unkonfiguriertes CPIOM oder eine unkonfigurierte Ein-/Ausgabevorrichtung der Steuervorrichtung 100 signalisieren, dass sie vorhanden ist und mittels einer Software automatisch konfiguriert werden kann.

In einem zweiten Betriebsmodus mag sich das System automatisch reparieren und rekonfigurieren lassen, wodurch die Reparatur und die Rekonfiguration schnell erfolgen kann.

Die Reparatur bzw. Konfiguration kann entweder von einem Bediener durchgeführt werden oder von dem System selbst, also im Wesentlichen vollkommen autark durchgeführt werden.

Da eine unkonfigurierten Ein-/Ausgabevorrichtung zum Einsatz kommt, welche erst nach Bedarf konfiguriert wird, mag vermieden werden, dass mehrere unterschiedliche Teilenummern für eine Ein-/Ausgabevorrichtung oder für ein CPIOM existieren. Die Ersatzteilhaltung mag durch das Wegfallen von mehreren unterschiedlichen Teilenummer für vorkonfigurierte CPIOMs reduziert werden und das Risiko, dass in einem Lager fehlerhafte Teile vorhanden sind, kann reduziert werden.

Fig. 1b zeigt ein exemplarisches Ausführungsbeispiel einer Ein-/Ausgabcvorrichtung 120 oder eines CPIOM 120. Das CPIOM weist eine erste Identifizierungseinrichtung 121 auf, die eingerichtet ist, zumindest eine Anwendung (nicht gezeigt in Fig. 1b), die auf der Ein-/Ausgabevorrichtung läuft, an eine Steuervorrichtung 100 (nicht gezeigt in Fig. 1b) weiter zu kommunizieren.. Die Identifizierungseinrichtung 121 kann eine Pinkodierung aufweisen. Mittels der Pinkodierung kann ein Pin Programming an der Rückseite oder der Back Plane eines Racks durchgeführt werden, an dem die Ein-/Ausgabevorrichtung 120 mittels der Identifizierungseinrichtung 121 angeschlossen wird. Die Identifizierungseinrichtung 121 kann auch als Stecker ausgebildet sein und als ein Interface zwischen der Ein-/Ausgabevorrichtung 120 und einem Rack fungieren, in welches die Ein-/Ausgabevorrichtung eingesteckt wird.

Über das Interface 121 kann eine Verbindung mit einem Flugzeugnetzwerk hergestellt werden, so dass die Ein-/Ausgabevorrichtung 120 und die Steuervorrichtung 100 über das Flugzeugnetzwerk in Kontakt treten können.

Die Identifizierungseinrichtung 121 kann so eingerichtet sein, dass bei einem Restart oder Reset der Ein-/Ausgabevorrichtung 120 ein Trigger, eine Anforderungsnachricht oder ein Anforderungssignal an eine zugehörige Steuervorrichtung 100 geschickt wird, so dass das System oder der SSNMS 100 eine neu installierte Ein-/Ausgabevorrichtung 120 oder ein neu installiertes CPIOM erkennen kann und automatisch eine Software, insbesondere eine passende Software, auf die Ein-/Ausgabevorrichtung 120 aufspielen kann.

Die Identifizierungseinrichtung 121 kann auch mit einer in Fig. 1c dargestellten Verbindungsschaltevorrichtung 140 oder einem AFDX-Switch 140 verbunden sein. Für die Verbindung kann der AFDX-Switch 140 Ports 141, 142 zur Verfügung stellen. Die Ports 141, 142 können als Interface für den Switch 140 dienen. Über einen Port 141 kann die Verbindungsschaltevorrichtung 140 mit einer zweiten Identifizierungseinrichtung 143 den Typ der angeschlossenen Ein-/Ausgabevorrichtung 120 (nicht gezeigt in Fig. 1C) ermitteln. Die zweite Identifizierungseinrichtung 143 mag eingerichtet sein, den Typ einer Ein-/Ausgabevorrichtung zu erkennen, welche an die Verbindungsschaltevorrichtung 140 angeschlossen ist. Mittels dem Schaltnetrwerk 144 kann die Verbindungsschaltevorrichtung eine Vielzahl von Ein-/Ausgabevorrichtungen 120, welche an den Ports 141, 142 angeschlossen sind, miteinander verbinden, beispielsweise über virtuelle Verbindungen. Ebenfalls kann der Switch 140 eine Verbindung zu einem angeschlossenen SSNMS 100 (ebenfalls nicht gezeigt in Fig. 1c) herstellen. Zum Herstellen der Verbindung mit dem SSNMS kann entweder das vorhandene Netzwerk genutzt werden, oder eine separate Daten-Konfigurationsleitung zwischen SSNMS 100 und Switch 140 vorgesehen sein.

Die Schnittstellen oder Interfaces 104, 121, 141, 142 mögen in einem exemplarischen Ausführungsbeispiel alle demselben Standard entsprechen. Ein Beispiel für einen Standrad von den Schnittstellen kann AFDX sein.

Das intelligente "Plug and Play"-IMA-System, welches mittels der Steuervorrichtung 100, der Ein-/Ausgabevorrichtung 120 und der Verbindungsschaltevorrichtung 140 aufgebaut werden kann, mag eine intelligente Fehlerbehandlung, während das Flugzeug in Betrieb ist, ermöglichen.

Beispielsweise mag bei einem Ausfall einer gesamten CPIOM 120 oder einer gesamten Ein-/Ausgabevorrichtung 120 das intelligente Netz 200, welches mittels zumindest einem Switch 140 gebildet wird, eine unkonfigurierte aber bereits in dem Netz installierte CPIOM 120 nutzen.

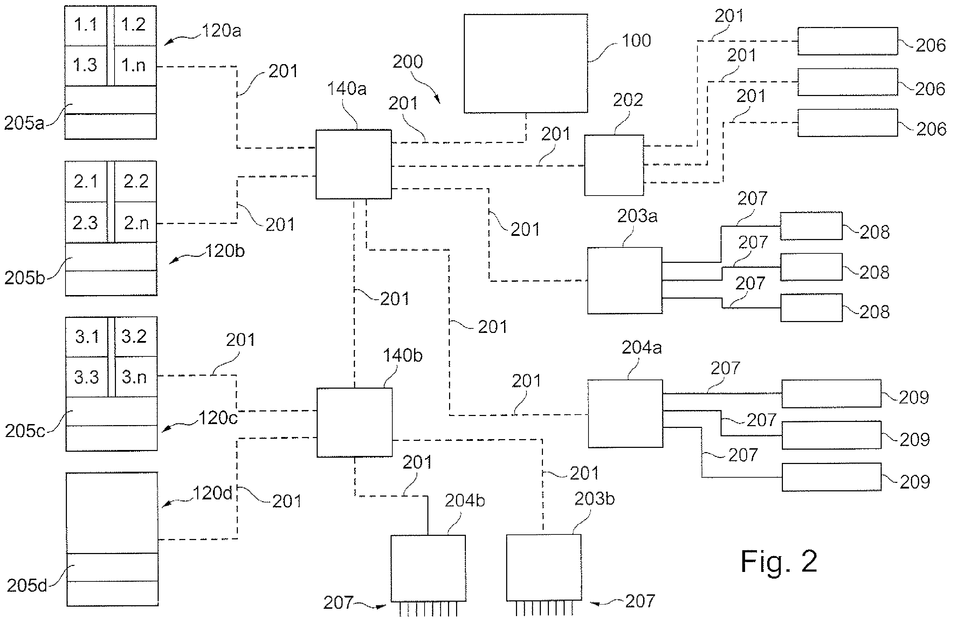

Der Ablauf einer Fehlererkennung und Fehlerbehebung in einem Flugzeugnetzwerk 200 wird in den Figuren Fig. 2, Fig. 3, Fig. 4 und Fig. 5 dargestellt. Fig. 2 zeigt den SSNMS 100, welcher an dem Flugzeugnetzwerk 200 oder AFDX-Netz 200 angeschlossen ist. Das AFDX-Netz 200 weist die physikalischen AFDX-Links 201 auf, welche die AFDX-Switche 140a, 140b mit anderen Komponenten verbindet. Bei dem AFDX-Netz 200 handelt es sich um ein digitales Netz. Das AFDX-Netz 200 bildet ein Flugzeugsteuersystem 200.

Die AFDX-Switche 140a, 140b sind mit dem zentralen SSNMS 100, den Ein-/Ausgabevorrichtungen 120a, 120b, 120c, 120d, dem Mikroschalter 202, den cRDCs (Common Remote Data Concentrator) 203a, 203b und den IOMs (Input/Output-Modul) 204a, 204b verbunden.

Die CPIOMs 120a, 120b, 120c, 120d weisen die gleiche Grundsoftware, Kernsoftware oder Firmware 205a, 205b, 205c und 205d auf. Bei den ersten drei in Fig. 2 dargestellten CPIOMs 120a, 120b, 120c handelt es sich um bereits konfigurierte Ein-/Ausgabevorrichtungen 120a, 120b, 120c, die jeweils vier Anwendungen aufweisen.

Die Anwendungen sind mittels eines Zahlencodes durchnummeriert. Der Zahlencode kann als eine Anwendungskennung angesehen werden. So weist das CPIOM 120a die Anwendungen 1.1, 1.2, 1.3 bis 1.n auf, wobei n eine beliebige natürliche Zahl sein kann, die der Anzahl der auf einem CPIOM installierten Anwendungen oder der Vielzahl an installierten Anwendungen entspricht.

Das zweite CPIOM CPIOM2 120b weist entsprechend die vier Anwendungen 2.1, 2.2., 2.3 und 2.n auf, das dritte CPIOM CPIOM3 120c weist entsprechend die vier Anwendungen. 3.1, 3.2, 3.3 und 3.n auf.

Die Anwendungen der konfigurierten CPIOMs 205a, 205b, 205c können redundante Anwendungen sein. So können sich beispielsweise die Anwendungen 1. 1, 2.2 und 3.3 entsprechen und bei einem Ausfall gegenseitig ersetzen. Der Einsatz von redundanten Anwendungen mag es ermöglichen, dass, wenn beispielsweise das dritte CPIOM Modul 120c ausfällt eine Anwendung 1.1, 2.2 immer noch mehrfach vorhanden ist. Eine Anwendung kann beispielsweise die Steuerung einer Landeklappe sein.

Bei dem vierten CPIOM CPIOM4 120d handelt es sich um ein im Wesentlichen unkonfiguriertes CPIOM, ein Ersatz-CPIOM oder eine Spare-CPIOM 120d. Das bedeutet, außer der Grundsoftware 205d weist das Reserve-CPIOM oder Spare-CPIOM keine Anwendung auf.

An dem Mikroschalter 202 sind ebenfalls über digitale Links, beispielsweise AFDX-Links 201, die intelligenten Sensoren 206 oder Smart Sensors 206 angeschlossen.

Über analoge Leitungen 207, ARINC (Aeronautical Radio Incorporated )-Leitungen 207 oder CAN (Controller Area Network)-Leitungen 207 sind an den cRDCs 203a, 203b die Sensoren 208 oder die Sensoren 209 oder Aktuatoren 209 an den IOMs angeschlossen 204a, 204b. Über den Mikro-Switch 202, die cRDCs 203a, 203b und die IOMs 204a, 204b lassen sich also Peripheriegeräte 206, 208, 209 mit dem AFDX-Netz 200 verbinden.

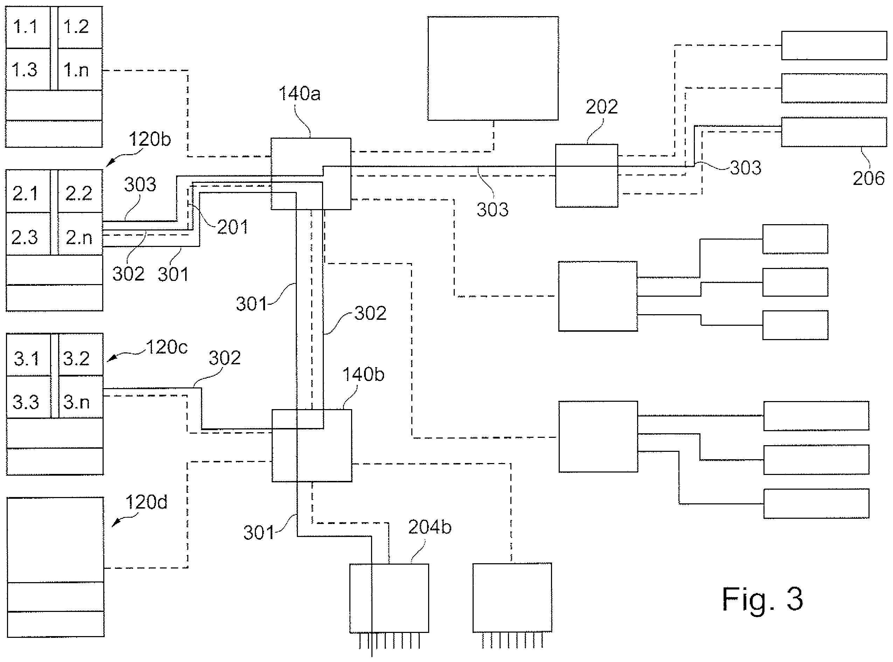

In der Fig. 3 sind drei virtuelle Links 301, 302 und 303 gezeigt. Der erste virtuelle Link 301 führt über den physikalischen AFDX-Link 201 parallel zu dem zweiten und dritten virtuellen Link und verbindet das zweite CPIOM 120b über die AFDX-Switche 140a, 140b mit einem nicht gezeigten Sensor oder Aktor 209 an dem zweiten IOM 204b.

Der zweite virtuelle Linke 302 ist ebenfalls über die beiden AFDX-Switche 140a, 140b geführt und verbindet das zweite CPIOM 120b mit dem dritten CPIOM 120c und insbesondere zwei Anwendungen.

Der dritte virtuelle Link 303 führt zunächst über den ersten AFDX 140a und den Mikroswitch 202 zu einem der Smart-Sensoren 206.

Das unkonfigurierten und redundante CPIOM 120d ist nicht in Benutzung und steht als sogenannte 1:N Redundanz für einen Fehlerfall zur Verfügung. Dabei steht N für die Anzahl an Geräten oder Anwendungen, für die das CPIOM 120d als Ersatz vorgesehen ist.

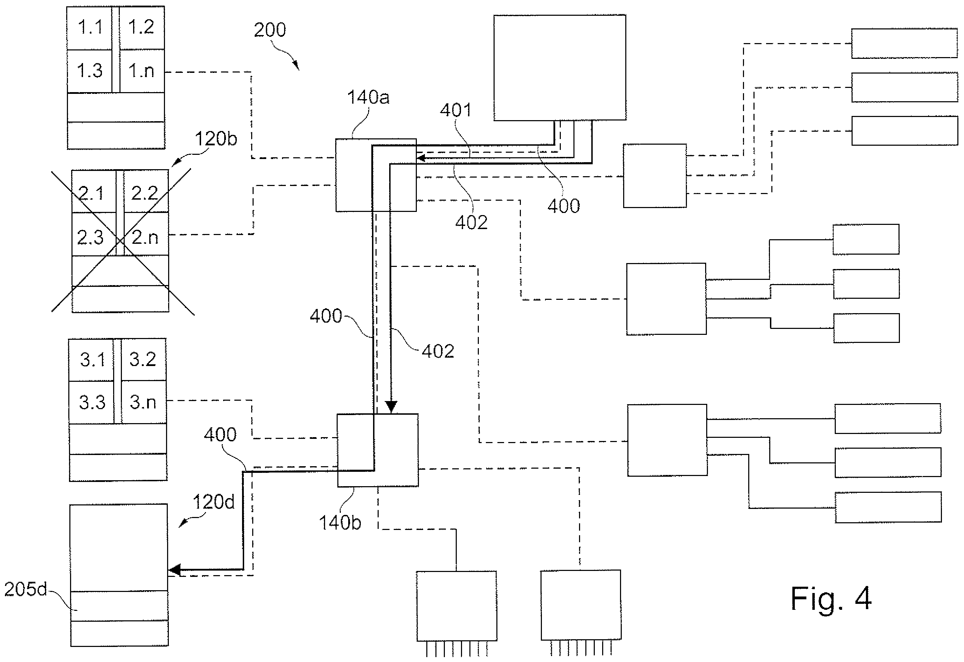

In Fig. 4 ist das Flugzeugnetzsystem 200 in einem Zeitpunkt dargestellt, kurz nachdem das zweite CPIOM 120b ausgefallen ist. Der SSNMS 100 identifiziert den fehlerhaften zweiten CPIOM 120b. Das smarte und intelligente Netz 200, insbesondere der SSNMS 100, der die Netzsteuerfunktion wahrnimmt, versucht den redundanten Ersatz-CPIOM 120d zu nutzen, der bereits in dem Flugzeugnetz 200 installiert ist. Der CPIOM 120d ist nutzbar, da auf ihm die Standardsoftware oder die Grundsoftware 205d bereits installiert ist. Jedoch hat der redundante CPIOM 120d keine Anwendungsprogramme geladen. Die Grundsoftware 205d kann jedoch eine Schnittstelle bereitstellen, auf die eine Anwendung aufsetzen kann.

Das Netzwerk 200, insbesondere der SSNMS 100, erkennt das von dem Ausfall betroffene zweite CPIOM 120b und erkennt die auf dem CPIOM 120b ursprünglich installierten Softwareanwendungen 2.1, 2.2, 2.3 und 2.n. Wie mittels des Pfeils 400 dargestellt ist, versucht der SSNMS 100 zunächst die identifizierten Anwendungen 2.1, 2.2, 2.3 und 2.n des zweiten CPIOMs 120b auf den zunächst noch unkonfigurierten CPIOM 120d zu laden.

Durch das flexible Aufspielen der Anwendungen mag sich die Zuverlässigkeit des Flugzeugsystems 200 erhöhen, welches die Systemkomponenten 100, 120a, 120b, 120c, 120d, 140a, 140b, 202, 203a, 204a, 203b, 204b und die Links 102 aufweist.

Nachdem die Applikationen auf den Ersatz-CPIOM 120d geladen worden sind, ermittelt der SSNMS 100 die neuen Verbindungen für die virtuellen Links 301, 302, 303. Über Steuerkanäle 401, 402 steht der SSNMS 100 mit den AFDX-Switche 140a, 140b in Verbindung und tauscht die Routing-Information aus, das heißt die Information über den Verlauf der neuen virtuellen Verbindungen 301', 302', 303'. Ein Steuerkanal kann als separate Leitung ausgeführt sein. Unter einem Steuerkanal kann auch eine Kommunikation über eine AFDX Leitung oder eine Kommunikation in einem AFDX Netzwerk verstanden werden.

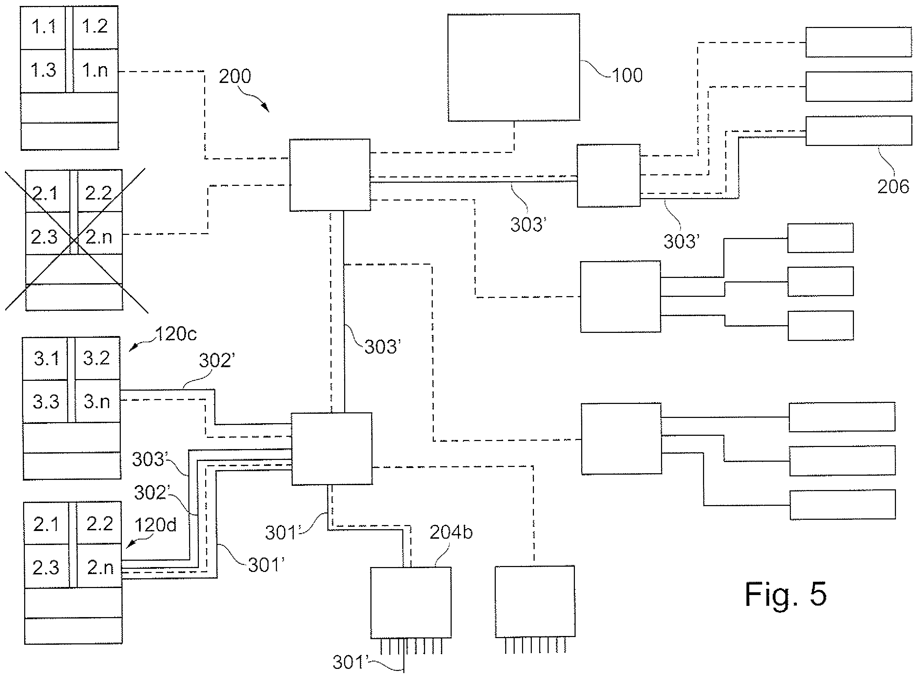

Somit mögen sich die in Fig. 5 dargestellten neu geführten oder umgelegten virtuellen Verbindungen 301`, 302` und 303` ergeben, welche nun das dritte CPIOM 120c mit dem vierten CPIOM 120d, das zweite IOM 204b mit dem vierten CPIOM 120d und den Smart-Sensor 206 mit dem vierten IOM 120d verbinden. Der neu konfigurierte vierte CPIOM 120d weist nun die Anwendungen 2.1, 2.2, 2.3 und 2.n des ursprünglich zweiten CPIOMs auf. Somit hat eine Umkonfiguration stattgefunden, welche jedoch die Funktion der peripheren Einheiten im Wesentlichen nicht beeinträchtigt. Es kann immer noch eine Zuordnung entsprechender Sensoren oder Periphcriegeräte zu Anwendungen 2.1, 2.2, 2.3 und 2.n hergestellt werden.

In anderen Worten mag die Plug-and-Play-IMA-Architektur IMA-Komponenten und den SSNMS 100 aufweisen. Das Plug-and-Play-IMA-Flugzeugnetzwerksystem weist den cRDC 203a, 203b, die CPIOMs 120a, 120b, 120c und zumindest einen Ersatz-CPIOMs 120d auf. Ferner weist das Flugzeugnetzwerk 200 die IOMs 204a, 204b, die AFDX-Switche 140a, 140b, den Mikroswitch 202 und das SSNMS 100 auf. Durch das Verwenden eines im Wesentlichen unkonfigurierten CPIOMs 120d kann vermieden werden, dass unterschiedliche CPIOMs oder Input/Output Boards, die an bestimmten Positionen angeordnet sind und feste Funktionen des CPIOMs erfüllen, verwendet werden müssen. Dadurch kann die Anzahl der Teilenummer für einen CPIOM 120a, 120b, 120c, 120d reduziert werden. Die Plug-and-Play-CPIOMs 120a, 120b, 120c, 120d, die sich mittels eines SSNMS 100 konfigurierten und laden lassen, mögen als digitale CPIOMs 120a, 120b, 120c, 120d realisiert werden. Dabei kann nur eine einzige Theilenummer (P/N) existieren.

Da die CPIOMs 120a, 120b, 120c, 120d im Wesentlichen vollständig als digitale Plug-and-Play-CPIOMs realisiert sind, sind die IOMs 204a, 204b und die RDCs 203a, 203b vorgesehen, die im Wesentlichen die analogen Daten der Sensoren 208, 209 zusammen sammeln und diese in das ADCN (Aircraft Data Communication Network) 200 digital übermittelt. Das IMA-System 200 oder das ADCN 200 kann sich ohne Plug-and-Play Funktionalität bzw. ohne Fehlerbehebungsfunktionalität wie ein herkömmliches IMA-System verhalten, um zu einem herkömmlichen IMA-System kompatibel zu sein.

Sollte jedoch ein Systemfehler auf einem CPIOM 120b auftraten und von dem SSNMS erkannt werden, lädt der SSNMS 100 die betroffene und verlorengegangene Systeznsoftware 2.1, 2.2, 2.3, 2.n auf das Ersatz-CPIOM 120d über das ADCN 200. Parallel zum Übertragen der Software oder der Programme von dem SSNMS 100 auf das unkonfigurierten CPIOM 120d werden die Switche 140a, 140b upgedatet oder konfiguriert mit Informationen über die neu zu etablierenden virtuellen Links oder virtuellen Verbindungen 301', 302', 303'. Das Updaten der Switche 140a, 140b kann in einem speziellen dynamischen Softwarebereich der Switche 140a, 140b oder in einem speziellen dynamischen Softwarebereich der Verbindungsschaltevorrichtungen 140a, 140b durchgeführt werden, welcher von den statischen Wegeinformationen oder statischen Routing-Informationen getrennt ist.

Das dynamische Routen 401, 402 der virtuellen Links 301`, 302`, 303` kann unter dem Beachten gewisser Prioritätsanforderungen erfolgen. Die neu zu etablierenden virtuellen Verbindungen 301', 302', 303' sollten so konfiguriert werden, dass Überlast-Situationen auf einzelnen Switche 140a, 140b vermieden werden. Die Verkehrslast auf den Switchen 140a, 140b wird in der Designphase festgelegt. Insbesondere wird eine obere Grenze für die maximal zulässige Verkehrlast pro Switch 140a, 140b festgelegt. Im Falle einer neuen Konfiguration oder Umkonfiguration aufgrund eines Systemfehlers oder Ausfalls eines CPIOMs kennt das Netzwerk, insbesondere der SSNMS 100 den Wert der freien Schaltleistung der Verbinduzagsschaltevorrichtung 140a, 140b in jeder der Verbindungsschaltevorrichtungen. Diese Verkehrlast kann von dem SSNMS 100, bei dem Re-Routen oder Umlegen der virtuellen Links berücksichtigt werden, so dass Mission Critical Application immer noch in Echtzeit durchgeführt werden können.

Neben der Last mag auch die Verzögerungszeit oder Latency-Zeit der virtuellen Links 30', 302', 303' mit den Anforderungen des betroffenen Systems in Einklang stehen. Beispielsweise müssen Daten von flugkritischen Anwendungen, wie das Betätigen von Landeklappen, den kürzestmöglichen Weg durch das Netz 200 nutzen, um die Daten, insbesondere die Geschwindigkeit für den Austausch von Daten, innerhalb der geforderten Antwortzeiten sicherstellen zu können. In anderen Worten mag der SSNMS so eingerichtet sein, dass besondere Kritikalitätsanforderungen von Flugzeugsystemen, wie beispielsweise Landeklappen, Leitwerk oder Fahrgestell, berücksichtigt werden können.

Daten einer als nicht kritisch eingestufte Anwendung können einen längeren Weg durch das Netzwerk 200 nehmen oder eine höhere Verzögerungszeit über eine größere Anzahl von Switchen 140a, 140b verkraften als Daten von flugkritischen Anwendungen. Längere virtuelle Verbindungen oder eine höhere Anzahl zu passierender Switche oder höhere Verzögerungszeiten mögen zu längeren Antwortzeiten führen. Der SSNMS 100 mag eine Prioritätsliste verwalten, in welcher die maximal zu verkraftenden Antwortzeiten für die jeweiligen Applikationen 2.1, 2.2, 2.3, 2.n verzeichnet sind.

Nach der Rekonfiguration verhält sich das System 200 im Wesentlichen wie vor dem Ausfall des CPIOM 120b. Der Ausfall eines einzelnen Systems mag im Wesentlichen keine Einschränkungen des Flugbetrieb bewirken.

Der SSNSM 100 kann auch bestimmen, wie im Falle einer Reparatur eines defekten CPIOM 120b verfahren wird. Er kann den neu konfigurierten CPIOM 120d als Standard-CPIOM verwenden und den dann reparierten CPIOM 120b oder ausgetauschten CPIOM 120b als Ersatz-CPIOM im System vorsehen.

Das Konfigurieren eines neu eingebrachten CPIOMs funktioniert im Wesentlichen wie die Fehlerbehebung, wobei die Fehlererkennung wegfallen mag.

Die Steuervorrichtung 100, die Ein-/Ausgabevorrichtung 120 und die Verbindungsschaltevorrichtung 140 mögen als Einschubkarten für ein Rack-System zur Verwendung in einem Flugzeug ausgestaltet sein.

Die Kritikalität mag zum Ausdruck bringen, wie wichtig oder wie unverzichtbar ein bestimmtes System für den Betrieb eines Flugzeugs sein mag. Ein System, dessen Ausfall zu schwerwiegenden Folgen führen könnte, mag eine höhere Kritikalität aufweisen als ein System, dessen Ausfall zu weniger schwerwiegenden Folgen führen mag. So mag beispielsweise der Ausfall eines On-Board-Unterhaltungssystems weniger kritisch sein als der Ausfall einer Navigationseinrichtung. Die Kritikalität mag eine Priorität vorgeben, die bei dem Aufspielen von Ersatzanwendungen bei Ausfall eines CPIOMs 120b berücksichtigt werden mag. Die Kritikalität oder die Priorität mag von einer Flugsicherungsbehörde vorgegeben werden.

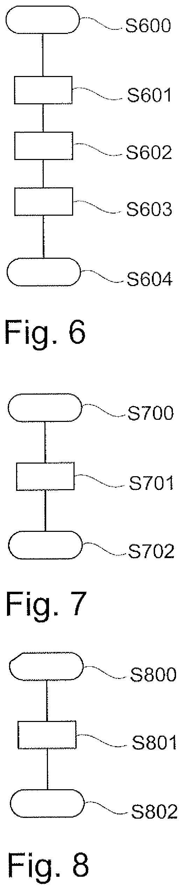

Fig. 6 zeigt ein Flussdiagramm für ein Verfahren zur Steuerung eines Flugzeugnetzwerks 100 gemäß einem exemplarischen Ausführungsbeispiel der vorliegenden Erfindung. Im Schritt S600 befindet sich das System, beispielsweise ein SSNMS 100, in einem Idle-Zustand.

In dem Schritt S601 erkennt die Steuereinrichtung eine unkonfigurierte Ein-/Ausgabeeinrichtung 120d in dem Flugzeugnetzwerk 200. Eine unkonfigurierte Ein-/Ausgabeeinrichtung 120d kann in dem Netz erkannt werden, da entweder eine Neuinstallation durchgeführt wurde oder da eine Systemkomponente ausgefallen ist.

Das Verfahren kann dann vorsehen, zumindest eine Anwendung zu bestimmen, die auf dem unkonfigurierten System 120d installiert werden soll. Im Falle einer Neuinstallation kann durch eine Adressierung ein Bezug von einer Ein-/Ausgabeeinrichtung zu einer zugehörigen Anwendung hergestellt werden. Im Falle einer Umkonfiguration bei Auftreten eines Fehlers kann die Anwendung durch eine ausgefallene Anwendung und/oder deren Kritikalität bestimmt werden.

Im Schritt S602 wird ein zu der identifizierten Anwendung gehörendes Programm bereitgestellt, welches der identifizierten Anwendung entspricht und welches im Schritt S603 auf die Ein-/Ausgabeeinrichtung aufgespielt werden kann. Im Schritt S604 befindet sich das System wieder in einem Idle-Modus.

Fig. 7 zeigt ein Verfahren zum Identifizieren einer Ein-/Ausgabevorrichtung mittels der Ein-/Ausgabevorrichtung. Im Schritt S700 mag sich die Ein-/Ausgabevorrichtung in einem Idle-Modus befinden.

Im Schritt S701 teilt die Ein-/Ausgabevorrichtung zumindest eine Anwendung, welche auf der Ein-/Ausgabevorrichtung läuft oder gelaufen ist, der Steuervorrichtung 100 oder der Verbindungsschaltevorrichtung 140a, 140b mit. Das Mitteilen kann durch eine Abfrage ausgelöst werden oder durch eine aktive Fehler- oder Starterkennung. Im Schritt S702 befindet sich die Ein-/Ausgabevorrichtung wieder in einem Idle-Zustand.

Die Fig. 8 zeigt ein Flussdiagramm für ein Verfahren zum Identifizieren einer Ein-/Ausgabevorrichtung in einer Verbindungsschaltevorrichtung. Das Verfahren startet im Schritt S800 in einem Idle-Modus.

Im Schritt S801 erkennt die Verbindungsschaltevorrichtung 140 eine angeschlossene Ein-/Ausgabevorrichtung. Insbesondere erkennt die Verbindungsschaltevorrichtung den Typ einer angeschlossenen Ein-/Ausgabevorrichtung. Die Verbindungsschaltevorrichtung 140 kann zum Erkennen eine Portabfrage durchführen, wobei in der Verbindungsschaltevorrichtung eine Zuordnung des Ports und eines jeweiligen Typs einer Ein-/Ausgabevorrichtung 120 gespeichert ist. Den Typ der angeschlossenen Ein-/Ausgabevorrichtung 120 kann die Verbindungsschaltevorrichtung an die Steuervorrichtung 100 kommunizieren.

Im Schritt S802 befindet sich das Verfahren wieder in einem Idle-Modus.

Ergänzend ist darauf hingewiesen, dass "umfassend" und "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Steuervorrichtung (100) für ein Flugzeugnetzwerk (200), aufweisend:
eine Anwendungsbestimmungseinrichtung (101);
eine Anwendungsbereitstelleinrichtung (102);
eine Fehlererkennungseinrichtung (108);
eine Verbindungsbestimmungseinrichtung;
wobei die Anwendungsbestimmungseinrichtung (101) eingerichtet ist, eine unkonfigurierte Ein-/Ausgabevorrichtung (120) in dem Flugzeugnetzwerk (200) zu erkennen;
wobei die Anwendungsbestimmungseinrichtung (101) eingerichtet ist, zumindest eine Anwendung zu bestimmen, welche zu der unkonfigurierten Ein-/Ausgabevorrichtung (120) gehört;
wobei die Anwendungsbereitstelleinrichtung (102) eingerichtet ist, ein Programm bereitzustellen, welches der zumindest einen Anwendung entspricht;
wobei die Anwendungsbereitstelleinrichtung (102) eingerichtet ist, das Programm auf die unkonfigurierte Ein-/Ausgabevorrichtung (120) aufzuspielen;
wobei die Fehlererkennungseinrichtung (108) eingerichtet ist, einen Fehler in einer konfigurierten Ein-/Ausgabevorrichtung (120) zu erkennen;
wobei die Anwendungsbestimmungseinrichtung (101) weiter eingerichtet ist, die zumindest eine Anwendung so zu bestimmen, dass die zumindest eine Anwendung eine von dem Fehler in der konfigurierten Ein-/Ausgabevorrichtung (120) betroffene Anwendung ist;
wobei die Verbindungsbestimmungseinrichtung eingerichtet ist, eine Verbindung, welche zu der konfigurierten Ein-/Ausgabevorrichtung geführt hat, auf die ursprünglich unkonfigurierte Ein-/Ausgabevorrichtung umzulegen.

2. Steuervorrichtung (100) nach Anspruch 1, wobei das Umlegen der Verbindung in Abhängigkeit einer Priorität einer zu der Verbindung gehörenden Anwendung erfolgt;
wobei die Priorität durch zumindest eines der Kriterien bestimmt wird, ausgewählt aus der Gruppe der Kriterien bestehend aus
Kritikalität einer Anwendung;
Last eines Knotens über den die Verbindung geführt wird; und
Anzahl von Zwischen-Knoten über die die Verbindung geführt wird.

3. Steuervorrichtung (100) nach Anspruch 1 oder 2, wobei die Verbindungsbestimmungseinrichtung eingerichtet ist, zum Umlegen der Verbindung mit einer Verbindungsschaltevorrichtung (140) zu kommunizieren.

4. Steuervorrichtung (100) nach einem der Ansprüche 1 bis 3, wobei die Steuervorrichtung (100) zum Betrieb an einer flugzeugspezifischen Stromversorgung eingerichtet ist.

5. Verfahren zur Steuerung eines Flugzeugnetzwerks, aufweisend:
Erkennen eines Fehlers in einer konfigurierten Ein-/Ausgabevorrichtung mit einer Fehlererkennungseinrichtung;
Erkennen einer unkonfigurierten Ein-/Ausgabeeinrichtung in dem Flugzeugnetzwerk mit einer Steuervorrichtung (100);
Bestimmen mit der Steuervorrichtung (100) von zumindest einer Anwendung, welche zu der unkonfigurierten Ein-/Ausgabevorrichtung gehört, derart, dass die zumindest eine Anwendung eine von dem Fehler in der konfigurierten Ein-/Ausgabevorrichtung (120) betroffene Anwendung ist;
Bereitstellen mit der Steuervorrichtung (100) eines Programms, welches der zumindest einen Anwendung entspricht;
Aufspielen des Programms auf die unkonfigurierte Ein-/Ausgabevorrichtung;
Umlegen einer Verbindung, welche zu der konfigurierten Ein-/Ausgabevorrichtung geführt hat, auf die ursprünglich unkonfigurierte Ein-/Ausgabevorrichtung.

6. Programmelement, welches ausgebildet ist, wenn es von einem Prozessor ausgeführt wird, das Verfahren zur Steuerung eines Flugzeugnetzwerks nach Anspruch 5 auszuführen..

7. Computerlesbares Speichermedium, welches einen Programmcode aufweist, der, wenn er von einem Prozessor ausgeführt wird, das Verfahren zur Steuerung eines Flugzeugnetzwerks nach Anspruch 5 ausführt.

## Claims

1. Control apparatus (100) for an aircraft network (200) comprising:
an application determination device (101);
an application provision device (102);
an error detection device (108);
a connection determination device;
wherein the application determination device (101) is adapted for detecting an unconfigured input/output apparatus (120) in the aircraft network (200);
wherein the application determination device (101) is adapted for determining at least one application relating to the unconfigured input/output apparatus (120);
wherein the application provision device (102) is adapted for providing a program that corresponds to the at least one application;
wherein the application provision device (102) is adapted for uploading the program onto the unconfigured input/output apparatus (120).
wherein the error detection device (108) is adapted for recognising an error in a configured input/output apparatus (120);
wherein the application determination device (101) is further adapted for determining the at least one application in such a way that the at least one application is an application that is affected by the error in the configured input/output apparatus (120);
wherein the connection determination device is adapted for re-routing a connection, which led to the configured input/output apparatus, to the originally unconfigured input/output apparatus.

2. Control apparatus (100) according to claim 1, wherein the re-routing of the connection takes place depending on a priority of an application relating to the connection;
wherein the priority is determined by at least one of the criteria selected from the group of criteria consisting of:
criticality of an application;
load of a node via which the connection is routed, and
number of intermediary nodes via which the connection is routed.

3. Control apparatus (100) according to claim 1 or 2, wherein the connection determination device is adapted for communicating with a connection switching apparatus (140) for the purpose of re-routing the connection.

4. Control apparatus (100) according to any of claims 1 to 3, wherein the control apparatus (100) is adapted for operation at an aircraft-specific power supply.

5. Method for controlling an aircraft network, comprising:
Recognising with an error detection device an error in a configured input/output apparatus;
Detecting with a control apparatus (100) an unconfigured input/output apparatus in the aircraft network;
Determining with the control apparatus (100) at least one application, which relates to the unconfigured input/output apparatus in such a way that the at least one application is an application that is affected by the error in the configured input/output apparatus (120);
Providing with the control apparatus (100) a program, which corresponds to the at least one application;
Uploading the program onto the unconfigured input/output apparatus;
Re-routing a connection, which led to the configured input/output apparatus, to the originally unconfigured input/output apparatus.

6. Program element, which is adapted to carry out the method for controlling an aircraft network according to claim 5, when being executed by a processor.

7. Computer readable storage medium comprising program code, which carries out the method for controlling an aircraft network according to claim 5, when being executed by a processor.

## Revendications

1. Appareil de commande (100) pour un réseau d'aéronef (200), comprenant:
un dispositif de détermination d'application (101);
un dispositif de fourniture d'application (102);
un dispositif de détection d'erreur (108);
un dispositif de détermination de connexion;
dans lequel le dispositif de détermination d'application (101) est agencé pour détecter un dispositif d'entrée / sortie non configuré (120) dans le réseau d'aéronef (200);
dans lequel le dispositif de détermination d'application (101) est agencé pour déterminer au moins une application associée au dispositif d'entrée / sortie non configuré (120);
dans lequel le dispositif de fourniture d'application (102) est agencé pour fournir un programme correspondant à la au moins une application;
dans lequel le dispositif de fourniture d'application (102) est agencé pour installer le programme sur le dispositif d'entrée / sortie non configuré (120);
dans lequel le dispositif de détection d'erreur (108) est agencé pour détecter une erreur dans un dispositif d'entrée / sortie configuré (120);
dans lequel le dispositif de détermination d'application (101) est en outre configuré pour déterminer la au moins une application de telle sorte que la au moins une application est une application affectée par l'erreur dans le dispositif d'entrée / sortie configuré (120);
dans lequel le dispositif de détermination de connexion est configuré pour transférer une connexion, qui a conduit au dispositif d'entrée / sortie configuré, vers le dispositif d'entrée / sortie initialement non configuré.

2. Appareil de commande (100) selon la revendication 1, dans lequel ladite relocalisation de la connexion est en réponse à une priorité d'une application associée à la connexion;
dans lequel la priorité est déterminée par au moins l'un des critères sélectionnés parmi le groupe de critères consistant en
La criticité d'une application;
Charge d'un noeud sur lequel la connexion est établie ; et
Nombre de noeuds intermédiaires sur lesquels la connexion est établie.

3. Appareil de commande (100) selon la revendication 1 ou 2, dans lequel le dispositif de détermination de connexion est agencé pour communiquer avec un dispositif de commutation de connexion (140) pour commuter la connexion.

4. Appareil de commande (100) selon l'une des revendications 1 à 3, dans lequel le dispositif de commande (100) est agencé pour fonctionner sur une alimentation électrique spécifique à l'aéronef.

5. Procédé de commande d'un réseau d'aéronef, comprenant:
Détecter une erreur dans un dispositif d'entrée / sortie configuré avec un dispositif de détection d'erreur;
Détecter un dispositif d'entrée / sortie non configuré dans le réseau d'aéronef avec un appareil de commande (100);
Déterminer avec l'appareil de commande (100) à partir d'au moins une application associée au dispositif d'entrée / sortie non configuré de telle sorte que la au moins une application est une application affectée par l'erreur dans le dispositif d'entrée / sortie configuré (120);
Fournir à l'appareil de commande (100) un programme correspondant à la au moins une application;
Installer le programme au dispositif d'entrée / sortie non configuré;
Transfert d'une connexion qui a conduit au dispositif d'entrée / sortie configuré vers le dispositif d'entrée / sortie initialement non configuré.

6. Elément de programme qui, lorsqu'il est exécuté par un processeur, est adapté pour exécuter le procédé de commande d'un réseau d'aéronef selon la revendication 5.

7. Support de stockage lisible par ordinateur ayant un code de programme qui, lorsqu'il est exécuté par un processeur, exécute le procédé de commande d'un réseau d'aéronef selon la revendication 5.
